# FASCICULE DE BREVET EUROPEEN

(11) **EP 0 856 429 B1**
(45) Date de publication et mention de la délivrance du brevet: **17.05.2000**
(21) Numéro de dépôt: 98470004.7
(22) Date de dépôt: 20.01.1998
(51) Int. Cl.: B60N 2/08

(54) **Glissière de réglage pour siège de véhicule automobile et système de réglage comportant deux telles glissières**
Verstellbare Gleitschiene für Kraftfahrzeugsitz und Einstellsystem mit zwei derartigen Gleitschienen
Adjustable slide for vehicle seat and adjusting device containing two such slides

(30) Priorité: 28.01.1997 FR 9701032
(43) Date de publication de la demande: 05.08.1998
(73) Titulaire: BERTRAND FAURE EQUIPEMENTS S.A., 92641 Boulogne Cedex (FR)
(72) Inventeur: Baroin, Claude, 57000 Metz (FR); Rohee, René, 57000 Metz (FR)
(74) Mandataire: Ballot, Paul Denis Jacques

(56) Documents cités:
- DE-A- 1 430 826
- FR-A- 2 232 464
- FR-A- 2 406 538
- FR-A- 2 656 262
- FR-A- 2 736 311
- GB-A- 2 253 999
- US-A- 2 636 545

## Description

L'invention concerne une glissière de réglage en position longitudinale d'un siège de véhicule automobile, ainsi qu'un système de réglage de position utilisant deux telles glissières.

Classiquement, les glissières doivent assurer deux fonctions qui sont le réglage en position par coulissement relatif d'un profilé femelle dans un profilé mâle et l'immobilisation en position une fois que le réglage est effectué.

Dans les glissières non motorisées, l'immobilisation est classiquement assurée par un verrou solidaire de l'un des profilés et pouvant s'engager avec des crans sur l'autre profilé. Le réglage en position peut s'effectuer par coulissement d'un profilé femelle solidaire de l'armature d'un siège par rapport à un profilé mâle solidaire du plancher du véhicule automobile, après déverrouillage au moyen d'un organe de commande agissant sur le verrou pour le libérer.

On connaît déjà différents systèmes de verrouillage de glissière basés sur la mise en prise des dents d'un peigne d'un verrou lié à la partie mobile de la glissière avec des crans aménagés sur le profilé fixe, la dite partie mobile étant solidaire du siège et le dit profilé fixe solidaire du plancher du véhicule. Par exemple, le document FR-A-2 656 262 décrit un système comportant un profilé femelle de section générale en forme de U présentant deux ailes et un profilé mâle coulissant longitudinalement entre les ailes du profilé femelle. Le verrou de blocage est constitué par une plaque située à l'extérieur contre une aile latérale du profilé femelle et articulé autour d'un axe situé sur l'extérieur de la dite aile. Un crevé réalisé sur la dite aile du profilé femelle, à l'intérieur duquel le verrou s'engage, permet le guidage et le maintien en position du dit verrou. Le verrou comporte également une partie mobile déplaçable verticalement située à l'intérieur de la glissière, la dite partie mobile comprenant une patte de verrouillage qui passe dans une fenêtre réalisée par un crevé embouti dans la partie basse de l'aile du U du profilé femelle. La dite patte de verrouillage comporte un moyen de verrouillage, constitué par les dents d'un peigne, et qui s'engage avec des crans réalisés sur le bord inférieur du retour d'aile du profilé mâle. Le verrou est maintenu en position de verrouillage par l'intermédiaire d'un ressort situé à l'extérieur de la glissière et les extrémités du ressort sont maintenues à la fois sur le dit verrou et par un crevé réalisé sur la dite aile du profilé femelle. Le dispositif de déverrouillage est constitué par un arceau situé à l'extérieur et agencé pour déplacer la dite partie mobile verticalement, par l'intermédiaire de deux pattes destinées à fixer le dit dispositif, permettant ainsi de libérer les dites dents du peigne des dits crans.

Ce système de verrouillage nécessite la réalisation de nombreux emboutissages ou découpes dans le profilé femelle et l'utilisation de plusieurs pièces, ne permettant pas le montage aisé et rapide de la glissière.

On connaît également une glissière verrouillable en position, telle que décrit dans le document FR-A-2 736 311, comportant un profilé femelle de section en U, un profilé mâle, et un verrou de blocage longitudinal du profilé mâle sur le profilé femelle. Le verrou est formé par une partie d'extrémité d'une lame élastiquement flexible placée à l'intérieur de la glissière et fixée, à distance de la dite partie d'extrémité, sur le profilé mâle. La dite partie d'extrémité est pourvue de créneaux qui s'engagent, dans une position de verrouillage, avec des crans aménagés sur le profilé femelle. La glissière comporte un palonnier de déverrouillage dont les branches pénètrent à l'intérieur de la glissière et agissent sur le verrou pour dégager, par une flexion élastique de la lame, les dits créneaux des dits crans.

La présente invention vise à simplifier la réalisation de systèmes de verrouillage du type décrit en premier ci-dessus, en réduisant le nombre de pièces nécessaires, et à augmenter la rapidité du montage d'un tel système, tout en conservant des moyens de commande de déverrouillage similaires, dont la mise en place est facilement réalisable par l'extérieur des glissières.

Avec ces objectifs en vue, l'invention a pour objet une glissière de réglage pour siège de véhicule automobile, comportant un profilé femelle ayant une section de forme générale en U présentant deux ailes et coulissant longitudinalement par rapport à un profilé mâle, et comportant un verrou de blocage du profilé femelle sur le profilé mâle et un dispositif de commande de déverrouillage, le dit verrou comportant une partie mobile déplaçable verticalement, la dite partie mobile comprenant une patte de verrouillage qui passe dans une fenêtre aménagée sur le profilé femelle, la dite patte de verrouillage comportant, à son extrémité située à l'intérieur du profilé femelle, des moyens de verrouillage qui s'engagent avec des crans aménagés sur le profilé mâle, et le dispositif de commande de déverrouillage, situé à l'extérieur des dits profilés, étant agencé pour déplacer la dite partie mobile pour libérer les dits moyens de verrouillage des dits crans, caractérisée en ce que le verrou est constitué d'une pièce et comprend, à la suite l'une de l'autre, une patte de fixation solidarisée sur le profilé femelle, une partie flexible et la dite partie mobile, la dite fenêtre est aménagée dans une face supérieure du profilé femelle et les dits crans sont aménagés sur un bord supérieur d'au moins une aile du profilé mâle, et le dispositif de commande de déverrouillage est agencé pour déplacer la dite partie mobile vers le haut en faisant fléchir élastiquement la partie flexible.

Grâce à l'invention, le nombre de pièces du système de verrouillage est réduit, puisqu'une seule pièce assure à la fois le verrouillage et le rappel élastique. Le montage du système de verrouillage s'en trouve simplifié, de même que la mise en place ultérieure du dispositif de commande de déverrouillage qui s'effectue par l'extérieur de la glissière.

Préférentiellement, la partie mobile du verrou a une section en U comportant deux ailes dirigées vers le bas, une première aile formant la dite patte de verrouillage, et la deuxième aile s'étendant contre une des ailes du profilé femelle et comportant des moyens de liaison avec le dispositif de commande de déverrouillage.

Grâce à cette disposition, les deux ailes du U formant la partie mobile du verrou encadrent les ailes des profilés, permettant de guider verticalement la dite partie mobile.

Selon un premier mode de réalisation de l'invention, la partie mobile du verrou comporte une aile formant la patte de verrouillage et se prolongeant par un repli horizontal transversal à la direction de la glissière, et les moyens de verrouillage sont constitués par des découpes qui sont réalisées dans l'angle formé entre l'aile et le repli et qui s'engagent dans les crans situés sur un bord supérieur d'une aile du profilé mâle.

Selon un deuxième mode de réalisation de l'invention, la partie mobile du verrou comporte une aile formant la patte de verrouillage et les moyens de verrouillage de la partie mobile sont formés par des créneaux réalisés sur les deux cotés d'une plaque s'étendant horizontalement à partir de l'extrémité de l'aile du U et s'engageant avec des crans réalisés sur les bords supérieurs des deux ailes du profilé mâle.

Cette disposition permet de réduire les contraintes de cisaillement supportées par les créneaux et les crans en les répartissant sur les deux cotés de la glissière.

Préférentiellement, l'aile du profilé femelle comporte un retour d'aile qui s'étend contre l'aile du profilé mâle, et qui porte également des crans avec lesquels les moyens de verrouillage s'engagent simultanément avec les crans du profilé mâle. La proximité directe des crans des profilés mâle et femelle fait que tous les efforts de déplacement des profilés ne créent que des contraintes de cisaillement sur les moyens de verrouillage et qu'aucune autre contrainte n'est transmise aux autres parties du verrou.

L'invention a aussi pour objet un système de réglage en position d'un siège de véhicule automobile, comportant deux glissières telles que définies précédemment et dans lequel le dispositif de commande de déverrouillage est un palonnier en forme de U dont les deux branches sont articulées par leurs extrémités sur des ergots s'étendant latéralement vers l'extérieur du système à partir des cotés des profilés femelles des deux glissières et s'engagent avec les moyens de liaison des parties mobile des verrous.

Le palonnier assure le déverrouillage simultané des verrous des deux glissières. Son montage, après fixation des glissières à la fois sur l'armature du siège et le plancher du véhicule, peut s'effectuer facilement. Il suffit de mettre en place le palonnier en écartant ses branches et en le positionnant en correspondance avec les ergots et les moyens de liaison des verrous, puis de le relâcher. L'élasticité du palonnier assure alors l'engagement de ses branches avec les dits ergots et les moyens de liaison, et son maintien en place sans besoin d'autres organes de fixation.

D'autres caractéristiques et avantages de l'invention apparaîtront dans la description qui va suivre d'un système de réglage en position d'un siège d'automobile conforme à l'invention.

On se reportera aux dessins annexés dans lesquels :
- la figure 1 est une vue partielle du système, en perspective et avec écorché, montrant les verrous des deux glissières et le palonnier de commande de déverrouillage,
- la figure 2 est une vue latérale partielle de la glissière située le plus à gauche sur la figure 1, en position verrouillée,
- la figure 3 est une vue correspondante, en position déverrouillée,
- la figure 4 est une vue en coupe selon la ligne IV-IV de la figure 2,
- la figure 5 est une vue en coupe selon la ligne V-V de la figure 3,
- la figure 6 une vue en perspective montrant le profilé femelle de la glissière dans la zone de verrouillage,
- la figure 7 est une vue en perspective d'un verrou dans un deuxième mode de réalisation, pouvant être monté sur la glissière représentée sur la partie droite de la figure 1,
- la figure 8 est une vue en coupe, correspondant à la figure 4, dans ce deuxième mode de réalisation.

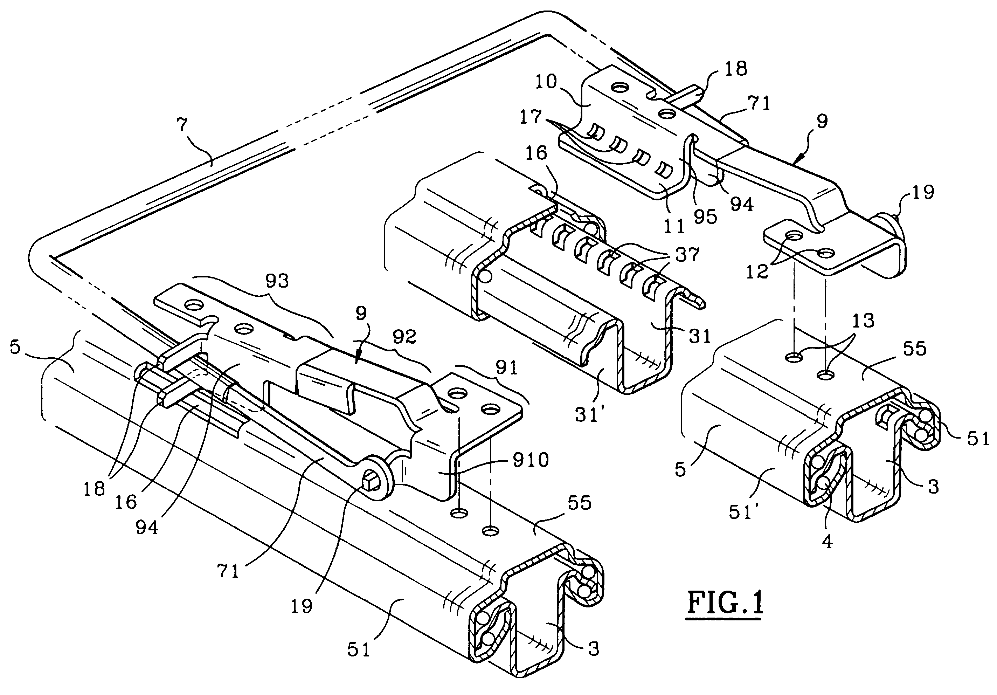

Le système de réglage en position du siège comporte deux glissières parallèles, telles que celles représentées figure 1. Chaque glissière est formée par l'assemblage d'un profilé mâle 3 sur lequel coulisse longitudinalement un profilé femelle 5, le profilé femelle 5 étant solidaire d'une armature, non représentée, du siège et le profilé mâle 3 étant lié au plancher, également non représenté, du véhicule automobile.

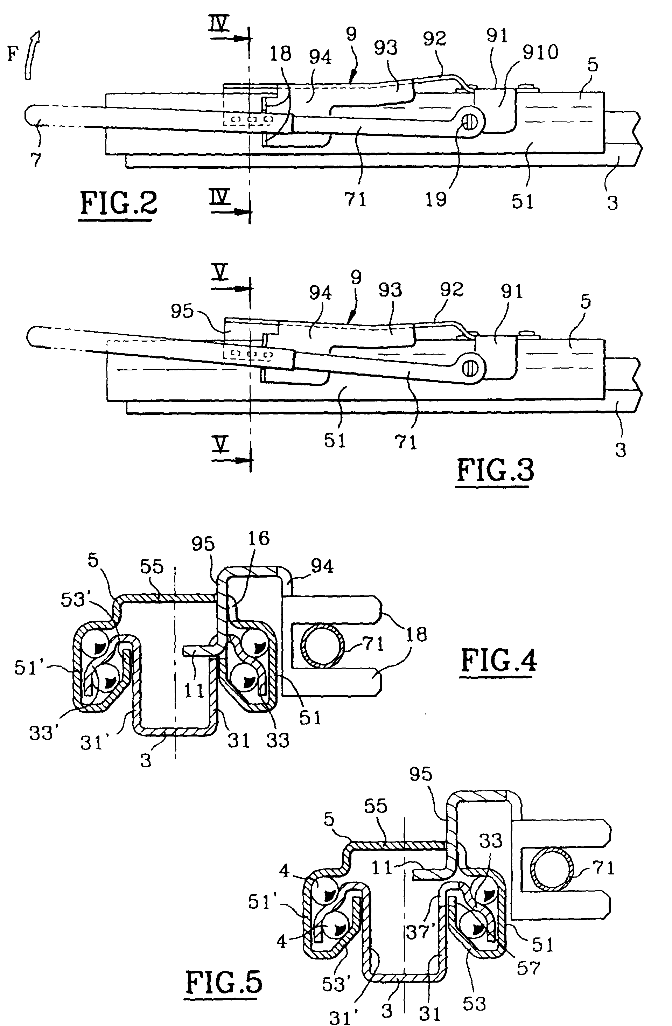

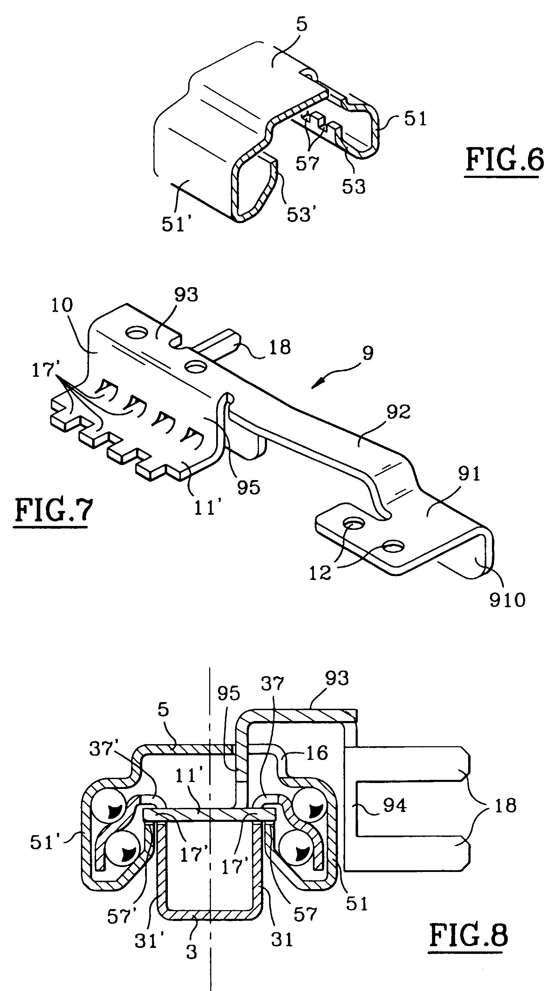

Comme le montrent les figures 4 et 5, le profilé femelle 5 a une section de forme générale en U, ouverte vers le bas, comportant deux ailes 51, 51' dont les bords sont repliés l'un vers l'autre pour former des retours d'ailes 53 et 53' orientés vers l'intérieur du profilé et vers le haut.

Le profilé mâle 3 a aussi une section de forme générale en U, ouverte vers le haut, dont les ailes 31 et 31' se terminent par des retours en crochet 33, 33' situés entre les ailes 51 et 51' et les retours d'ailes 53 et 53' du profilé femelle 5.

L'ensemble des ailes, retours d'ailes et crochets des profilés, est composé de manière à former un chemin de roulement pour des billes 4, pour faciliter le coulissement relatif des profilés.

Les formes spécifiquement illustrées sur les dessins, les sections des profilés et leur agencement relatif, en vue du coulissement relatif des profilés, pourront toutefois être modifiés sans pour autant sortir du cadre de l'invention.

De manière spécifique à l'invention, une rangée de crans de verrouillage 37 est réalisée sur le bord supérieur de l'aile 31 du profilé mâle, dans l'angle formé entre ce dernier et le retour en crochet 33. Les systèmes de verrouillage des deux glissières sont situés symétriquement par rapport à un plan médian vertical de l'ensemble de réglage en position, vers l'extérieur du dit ensemble.

Chaque système de verrouillage comporte un verrou 9 réalisé d'une seule pièce, par découpe et façonnage, a partir d'une lame en matériau élastiquement déformable, en particulier en acier à ressort. Le verrou s'étend, dans son ensemble, dans la direction longitudinale de la glissière et comporte successivement une patte de fixation 91, une partie intermédiaire flexible 92 et une partie mobile 93. La patte de fixation 91, constituant une extrémité du verrou, est solidarisée sur la face supérieure formant le fond 55 du U du profilé femelle 5, par exemple par des rivets passant dans des orifices de fixation 12 et 13 réalisés respectivement dans la dite patte de fixation 91 et dans le profilé femelle 5. La patte de fixation 91 comprend également un repli 910 qui s'étend contre l'aile 51 du profilé femelle et à partir duquel un ergot 19, formé d'une pièce avec la patte de fixation, s'étend transversalement par rapport à la direction de la glissière et constitue un axe de pivotement pour un palonnier de déverrouillage 7, comme on le verra par la suite. La partie intermédiaire flexible 92 constitue une lame élastiquement flexible s'étendant sensiblement parallèlement à la face supérieure formant le fond du U du profilé femelle 5, et servant de moyen de rappel élastique de la partie mobile 93 dans la position de verrouillage. La partie mobile 93, située à l'autre extrémité du verrou 9, est donc déplaçable verticalement par flexion de la lame flexible 92 et a une section de forme générale en U, ouverte vers le bas, comportant deux ailes 94 et 95 qui s'étendent verticalement.

L'aile 95 passe dans une fenêtre 16 réalisée sur le bord supérieur du profilé femelle 5 et se prolonge à l'intérieur de la glissière par un repli horizontal 11 transversal à la glissière. Des découpes 17 sont réalisées dans l'angle formé entre le repli 11 et l'aile 95 et s'engagent en position de verrouillage avec des crans 37 du profilé mâle.

En position de verrouillage, les découpes 17 s'engagent également dans des crans 57, mieux visibles figure 6, réalisés sur le bord supérieur du retour d'aile 53 du profilé femelle 5, uniquement dans la zone a l'aplomb de la fenêtre 16, ce bord étant situé contre le bord supérieur de l'aile 31 du profile mâle. De ce fait, la proximité directe des crans 37 et 57 des profilés mâle et femelle fait que tous les efforts de déplacement des profilés ne créent que des contraintes de cisaillement au niveau des découpes, aucune autre contrainte n'étant transmise aux autres parties du verrou 9.

On va maintenant décrire plus en détail les moyens permettant d'assurer le déverrouillage de la glissière. Pour déverrouiller les glissières et régler longitudinalement la position du siège, le palonnier 7, formé par exemple d'un tube cintré en forme de U, comporte deux branches 71 dont les extrémités s'articulent respectivement sur les ergots 19 des verrous des deux glissières. L'aile 94 de la partie mobile 93 du verrou située à l'extérieur de la glissière comporte une agrafe 18 constituée de deux pattes formées d'une pièce avec l'aile 94 et s'étendant transversalement par rapport à la direction des glissières. La branche 71 du palonnier s'insère entre les deux pattes de l'agrafe 18. Ainsi, une action verticale F sur le palonnier 7 produit un déplacement vertical de la partie mobile 93 du verrou 9 vers le haut, qui libère les découpes 17 des crans 37 et 57 des profilés et permet ainsi leur coulissement relatif. Le verrouillage s'effectue automatiquement, après avoir relâché le palonnier 7, par l'effet de rappel élastique de la partie flexible 92 du verrou.

Les figures 7 et 8 présentent une variante de réalisation des moyens de verrouillage. Dans cette variante, l'aile 95 du U formant la partie mobile se prolonge par une plaque 11' qui s'étend d'une aile à l'autre du profilé mâle. La plaque 11' comporte de chaque coté des créneaux 17' qui s'engagent avec les crans 37 et 37' réalisés dans ce cas sur le bord supérieur des deux ailes 31 et 31' du profilé mâle 3 et aussi avec les crans 57 et 57' réalisés sur le bord supérieur des retours d'ailes 53 et 53' du profilé femelle 5.

L'invention ne se limite pas aux modes de réalisation décrits ci-dessus uniquement à titre d'exemple. En particulier;
- l'articulation du palonnier peut être modifiée, par exemple en remplaçant les ergots 19 par des pivots liés au profilé femelle,
- l'agrafe 18 de la partie mobile 93 pourrait comporter une seule patte s'étendant transversalement par rapport à la direction de la glissière et qui viendrait se loger dans un orifice réalisé sur une branche du palonnier de déverrouillage.

## Revendications

1. Glissière de réglage pour siège de véhicule automobile, comportant un profilé femelle (5) ayant une section en forme de U présentant deux ailes (51, 51') et coulissant longitudinalement par rapport à un profilé mâle (3), et comportant un verrou (9) de blocage du profilé femelle (5) sur le profilé mâle (3) et un dispositif de commande de déverrouillage (7), le dit verrou comportant une partie mobile (93) déplaçable verticalement, la dite partie mobile comprenant une patte de verrouillage (10) qui passe dans une fenêtre (16) aménagée sur le profilé femelle (5), la dite patte de verrouillage comportant, à son extrémité située à l'intérieur du profilé femelle, des moyens de verrouillage (17, 17') qui s'engagent avec des crans (37, 37') aménagés sur le profilé mâle, et le dispositif de commande de déverrouillage (7), situé à l'extérieur des dits profilés, étant agencé pour déplacer la dite partie mobile (93) pour libérer les dits moyens de verrouillage (17, 17') des dits crans (37, 37'), caractérisée en ce que le verrou (9) est constitué d'une pièce et comprend, à la suite l'une de l'autre, une patte de fixation (91) solidarisée sur le profilé femelle (5), une partie flexible (92) et la dite partie mobile (93), la dite fenêtre (16) est aménagée dans une face supérieure (55) du profilé femelle et les dits crans (37, 37') sont aménagés sur un bord supérieur d'au moins une aile (31, 31') du profilé mâle, et le dispositif de commande de déverrouillage (7) est agencé pour déplacer la dite partie mobile (93) vers le haut en faisant fléchir élastiquement la partie flexible (92).

2. Glissière, selon la revendication 1, caractérisée en ce que la partie mobile (93) du verrou (9) a une section générale en forme de U comportant deux ailes (94,95) dirigées vers le bas, une première aile (95) formant la dite patte de verrouillage, et la deuxième aile (94) s'étendant contre une des ailes (51) du profilé femelle et comportant des moyens de liaison (18) avec le dispositif de commande de déverrouillage (7).

3. Glissière selon la revendication 1 caractérisée en ce que la partie mobile (93) du verrou (9) comporte une aile (95) formant la patte de verrouillage et se prolongeant par un repli horizontal (11) transversal à la direction de la glissière, et les moyens de verrouillage sont constitués par des découpes (17) qui sont réalisées dans l'angle formé entre l'aile (95) et le repli (11) de la partie mobile du verrou et qui s'engagent avec les crans (37) du profilé mâle (3) situés sur un bord supérieur d'une aile (31) du profilé mâle (3).

4. Glissière selon la revendication 1, caractérisée en ce que la partie mobile (93) du verrou (9) comporte une aile (95) formant la patte de verrouillage et les moyens de verrouillage sont formés par des créneaux (17') réalisés des deux cotés d'une plaque (11') s'étendant horizontalement à partir d'un bord de l'aile (95) du U, les dits créneaux (17') s'engageant avec des crans (37, 37') réalisés sur les bords supérieurs des deux ailes (31, 31') du profilé mâle (3).

5. Glissière selon l'une quelconque des revendications 1 à 4, caractérisée en ce que l'aile (51, 51') du profilé femelle (5) comporte un retour d'aile (53, 53') qui s'étend contre l'aile (31, 31') du profilé mâle (3), et qui porte également des crans (57, 57') avec lesquels les moyens de verrouillage (17, 17') s'engagent simultanément avec les crans (37, 37') du profilé mâle (3).

6. Système de réglage en position d'un siège de véhicule automobile, caractérisé en ce qu'il comporte deux glissières selon l'une des revendications 2 à 5 et en ce que le dispositif de commande de déverrouillage est un palonnier (7) en forme de U dont les deux branches (71) sont articulées par leurs extrémités sur des ergots (19) s'étendant latéralement à partir des profilés femelles (5) vers l'extérieur du système et s'engagent avec les dits moyens de liaison (18) des parties mobiles (93) des verrous.

7. Système de réglage en position selon la revendication 6, caractérisé en ce que, pour chaque glissière, l'ergot (19) est formé d'une pièce avec la patte de fixation (91), à partir d'un repli (910) qui s'étend contre l'aile (51) du profilé femelle située vers l'extérieur du système.

8. Système de réglage en position selon la revendication 7, caractérisé en ce que, pour chaque glissière, les moyens de liaison de la partie mobile du verrou sont constitués d'une agrafe (18), formée d'une pièce avec la première aile (94) et disposée transversalement, dans laquelle s'insère une branche (71) du palonnier (7) de déverrouillage, pour déplacer verticalement la partie mobile (93), l'ergot (19) servant d'axe de pivotement.

9. Système de réglage en position selon l'une des revendications 6 à 8, caractérisé en ce que le palonnier (7) est maintenu en position sur les moyens de liaison (18) et les ergots (19) par déformation élastique.

## Patentansprüche

1. Verstellbare Gleitschiene für Kraftfahrzeugsitze, mit einem weiblichen Profil (5), das einen U förmigen Querschnitt mit zwei Armen (51, 51') aufweist und längs bezüglich einem männlichen Profil (3) gleitet, und mit einem Riegel (9) zum Blockieren des weiblichen Profils (5) an dem männlichen Profil (3) und einer Entrigelungssteuervorrichtung (7), wobei der Riegel- einen beweglichen Abschnitt (93) aufweist, der vertikal bewegbar ist, wobei der bewegliche Abschnitt eine Verriegelungslasche (10) aufweist, die sich in ein Fenster (16) erstreckt, das an dem weiblichen Profil (5) ausgebildet ist, wobei die Verriegelungslasche an ihrem Ende, das im Inneren des weiblichen Profils angeordnet ist, Verriegelungseinrichtungen (17, 17') aufweist, die in Eingriff stehen mit Krampen (37, 37'), die an dem männlichen Profil ausgebildet sind, und wobei die Entriegelungssteuervorrichtung (7), die außen an den Profilen angeordnet ist, derart bewegbar ist, daß sie einen beweglichen Abschnitt (93) bewegt, um die Verriegelungseinrichtungen (17, 17') der Krampen (37, 37') freizugeben, dadurch gekennzeichnet, daß der Riegel (9) aus einem Stück oder Teil gebildet ist, und nacheinanderfolgend eine Befestigungslasche (91), die mit dem weiblichen Profil (5) verbunden ist, einen biegsamen oder flexiblen Abschnitt (92) und den beweglichen Abschnitt (93) aufweist, wobei das Fenster (16) in einer Oberseite (55) des weiblichen Profils ausgebildet ist und die Krampen (37, 37') an einem oberen Rand wenigstens eines Armes (31, 31') des männlichen Profils ausgebildet sind, und die Entriegelungssteuervorrichtung (7) angeordnet ist, um den beweglichen Abschnitt (93) nach oben zu bewegen unter elastischen Abbiegen des elastischen Abschnitts (92).

2. Gleitschiene nach Anspruch 1, dadurch gekennzeichnet, daß der bewegliche Abschnitt (93) des Riegels (9) einen Querschnitt in allgemeiner U-Form aufweist, mit zwei Armen (94, 95), die nach unten gerichtet sind-, wobei ein erster Arm (95) die Verriegelungslasche bildet, und der zweite Arm (94) sich gegen einen der Arme (51) des weiblichen Profils erstreckt und Verbindungseinrichtungen (18) mit der Entriegelungssteuervorrichtung (7) aufweist.

3. Gleitschiene nach Anspruch 1, dadurch gekennzeichnet, daß der bewegliche Abschnitt (93) des Riegels (9) einen Arm (95) aufweist, der die Verriegelungslasche bildet und sich durch einen horizontalen Umschlag (11), quer zur Richtung der Gleitschiene, verlängert, und die Verriegelungseinrichtungen durch Ausschnitte (17) gebildet werden, die in einem Winkel zwischen dem Arm (95) und dem Umschlag (11) des beweglichen Abschnitts des Riegels gebildet sind, und die mit den Krampen (37) des männlichen Profils (3) in Eingriff stehen, die an einem oberen Rand eines Armes (31) des männlichen Profils (3) angeordnet sind.

4. Gleitschiene nach Anspruch 1, dadurch gekennzeichnet, daß der bewegliche Abschnitt (93) des Riegels (9) einen Arm (95) aufweist, der die Verriegelungslasche bildet und die Verriegelungsvorrichtungen durch Scharten (17') gebildet werden, die an beiden Seiten einer Platte (11') ausgebildet sind, wobei sie sich horizontal ausgehend von einem Rand des Armes (95) des U erstrecken, wobei die Scharten (17') in Eingriff stehen mit Krampen (37, 37'), die an den oberen Rändern der beiden Armen (31, 31') des männlichen Profils (3) ausgebildet sind.

5. Gleitschiene nach einem der Ansprüche 1 bis 4, dadurch gekennzeichnet, daß der Arm (51, 51') des weiblichen Profils (5) einen Armumschlag (53, 53') aufweist, der sich gegen den Arm (31, 31') des männlichen Profils (3) erstreckt, und der ebenfalls Krampen (57, 57') aufweist, mit denen die Verriegelungseinrichtungen (17, 17') gleichzeitig in Eingriff stehen mit den Krampen (37, 37') des männlichen Profils (3).

6. Positionseinstellsystem eines Kraftfahrzeugsitzes, dadurch gekennzeichnet, daß es zwei Gleitschienen nach einem der Ansprüche 2 bis 5 aufweist und daß die Entriegelungssteuervorrichtung ein Steuerhebel oder Querhebel (7) in U-Form ist, von dem beide Arme (71) mit ihren Enden an Zapfen oder Vorsprüngen (19) angelenkt sind, die sich seitlich ausgehend von den weiblichen Profilen (5) nach dem Äußeren des Systems erstrecken und in Eingriff mit den Verbindungseinrichtungen (18) der beweglichen Abschnitte (93) der Riegel sind.

7. Positionseinstellsystem nach Anspruch 6, dadurch gekennzeichnet, daß für jede Gleitschiene der Zapfen oder Vorsprung (19) mit der Befestigungslasche (91) einteilig ausgebildet ist ausgehend von einem Umschlag (910), der sich gegen den Arm (51) des weiblichen Profils erstreckt, der in Richtung des Äußeren des Systems angeordnet ist.

8. Positionseinstellsystem nach Anspruch 7, dadurch gekennzeichnet, daß für jede Gleitschiene die Verbindungseinrichtungen des beweglichen Abschnitts des Riegels aus einer Zange (18) gebildet sind, gebildet aus einem Teil mit dem ersten Arm (94) und quer angeordnet, in dem ein Arm (71) des Steuerhebels (7) der Entriegelung eindringt, um vertikal den beweglichen Abschnitt (93) zu bewegen, wobei der Zapfen (19) als Schwenkachse dient.

9. Positionseinstellsystem nach einem der Ansprüche 6 bis 8, dadurch gekennzeichnet, daß der Steuerhebel (7) in seiner Position auf den Verbindungseinrichtungen (18) und den Vorsprüngen (19) durch elastische Verformung gehalten wird.

## Claims

1. Adjusting slide for motor vehicle seat, including a female profile (5) having a U-shaped cross-section possessing two flanges (51, 51') and sliding longitudinally with respect to a male profile (3), and including a latch (9) for locking the female profile (5) to the male profile (3) and an unlocking control device (7), the said latch including a vertically displaceable movable part (93), the said movable part comprising a locking tab (10) which passes through a window (16) made on the female profile (5), the said locking tab including, at its end situated in the inside of the female profile, locking means (17, 17') which engage with notches (37, 37') made on the male profile, and the unlocking control device (7), situated outside the said profiles, being arranged to displace the said movable part (93) in order to release the said locking means (17, 17') from the said notches (37, 37'), characterized in that the latch (9) consists of one piece and comprises, one after the other, a fixing tab (91) secured to the female profile (5), a flexible part (92) and the said movable part (93), the said window (16) is made in an upper face (55) of the female profile and the said notches (37, 37') are made on an upper edge of at least one flange (31, 31') of the male profile, and the unlocking control device (7) is arranged to displace the said movable part (93) upwards, causing the flexible part (92) to bend elastically.

2. Slide according to Claim 1, characterized in that the movable part (93) of the latch (9) has a generally U-shaped cross-section including two downwardly directed flanges (94,95), a first flange (95) forming the said locking tab, and the second flange (94) extending adjacent to one of the flanges (51) of the female profile and including means for connection (18) to the unlocking control device (7).

3. Slide according to Claim 1, characterized in that the movable part (93) of the latch (9) includes a flange (95) forming the locking tab and being continued by way of a horizontal fold (11) transverse to the direction of the slide, and the locking means consist of cutouts (17) which are made in the angle formed between the flange (95) and the fold (11) of the movable part of the latch and which engage with the notches (37) of the male profile (3) situated on an upper edge of one flange (31) of the male profile (3).

4. Slide according to Claim 1, characterized in that the movable part (93) of the latch (9) includes a flange (95) forming the locking tab and the locking means are formed by teeth (17') made on both sides of a plate (11') extending horizontally from an edge of the flange (95) of the U, the said teeth (17') engaging with notches (37, 37') made on the upper edges of the two flanges (31, 31') of the male profile (3).

5. Slide according to any one of Claims 1 to 4, characterized in that the flange (51, 51') of the female profile (5) includes a flange foldback (53, 53') which extends adjacent to the flange (31, 31') of the male profile (3) and which likewise carries notches (57, 57') with which the locking means (17, 17') engage simultaneously with the notches (37, 37') of the male profile (3).

6. System for positional adjustment of a motor vehicle seat, characterized in that it includes two slides according to one of Claims 2 to 5 and in that the unlocking control device is a U-shaped crossbar (7), the two limbs (71) of which are articulated by their ends on lugs (19) extending laterally from the female profiles (5) towards the outside of the system and engage with the said means for connection (18) of the movable parts (93) of the latches.

7. System for positional adjustment according to Claim 6, characterized in that, for each slide, the lug (19) is formed in one piece with the fixing tab (91), from a fold (910) which extends adjacent to the flange (51) of the female profile situated towards the outside of the system.

8. System for positional adjustment according to Claim 7, characterized in that, for each slide, the means for connection of the movable part of the latch consist of a clip (18), formed in one piece with the first flange (94) and arranged transversely, in which there fits a limb (71) of the unlocking crossbar (7), for vertically displacing the movable part (93), the lug (19) serving as a pivot pin.

9. System for positional adjustment according to one of Claims 6 to 8, characterized in that the crossbar (7) is held in position on the means for connection (18) and the lugs (19) by elastic deformation.
